# EUROPÄISCHE PATENTSCHRIFT

(11) **EP 3 921 936 B1**
(45) Veröffentlichungstag und Bekanntmachung des Hinweises auf die Patenterteilung: **13.03.2024**
(21) Anmeldenummer: 20702199.9
(22) Anmeldetag: 23.01.2020
(51) Int. Cl.: H02P 3/22, H02P 6/24

(54) **ANTRIEBSSYSTEM MIT WECHSELRICHTER UND ELEKTROMOTOR UND VERFAHREN ZUM BETREIBEN EINES ANTRIEBSSYSTEMS**
DRIVE SYSTEM WITH INVERTER AND ELECTRIC MOTOR AND METHOD FOR OPERATING A DRIVE SYSTEM
SYSTÈME D'ENTRAÎNEMENT POURVU D'UN ONDULEUR ET D'UN MOTEUR ÉLECTRIQUE ET PROCÉDÉ POUR FAIRE FONCTIONNER UN SYSTÈME D'ENTRAÎNEMENT

(30) Priorität: 07.02.2019 DE 102019000875
(43) Veröffentlichungstag der Anmeldung: 15.12.2021
(73) Patentinhaber: SEW-EURODRIVE GmbH & Co. KG, 76646 Bruchsal (DE)
(72) Erfinder: HETTEL, Norbert, 76474 Au am Rhein (DE); KOLBERT, Alexander, 76356 Weingarten (DE)
(86) Internationale Anmeldenummer: PCT/EP2020/025028
(87) Internationale Veröffentlichungsnummer: WO 2020/160841

(56) Entgegenhaltungen:
- DE-A1-102004 057 915
- DE-A1-102007 058 098
- US-A1- 2005 174 081

## Beschreibung

Die Erfindung betrifft ein Antriebssystem mit Wechselrichter und Elektromotor und ein Verfahren zum Betreiben eines Antriebssystems.

Es ist allgemein bekannt, dass ein Antriebssystem als Wechselrichter-gespeister Elektromotor ausführbar ist.

**Aus der** DE 10 2004 057915 A1 **ist als nächstliegender Stand der Technik ist ein Verfahren zum Steuerung des Energieflusses bei einem Antrieb bekannt.**

**Aus der** US 2005/174081 A1 **ist ein dynamisches Bremswiderstandsnetzwerk bekannt.**

**Aus der** DE 10 2007 058 098 A1 **ist eine sichere elektrische Bremseinrichtung für Druckmaschinen bekannt.**

Der Erfindung liegt daher die Aufgabe zugrunde, ein Antriebssystem mit erhöhter Sicherheit auszuführen eine Vorrichtung und ein Verfahren weiterzubilden, wobei
Erfindungsgemäß wird die Aufgabe bei dem Antriebssystem nach den in Anspruch 1 und bei dem Verfahren nach den in Anspruch 7 angegebenen Merkmalen gelöst.

Wichtige Merkmale der Erfindung bei dem Antriebssystem mit Wechselrichter und Elektromotor sind, dass der Elektromotor aus dem wechselspannungsseitigen Anschluss des Wechselrichters gespeist wird,
wobei am gleichspannungsseitigen Anschluss des Wechselrichters eine aus einem Bremswiderstand und einem ersten steuerbaren Halbleiterschalter gebildete erste Reihenschaltung angeschlossen ist,
wobei parallel zur ersten Reihenschaltung, insbesondere parallel zum gleichspannungsseitigen Anschluss des Wechselrichters, eine aus einer Impedanz und einem steuerbaren zweiten Halbleiterschalter gebildete zweite Reihenschaltung angeschlossen ist.

Von Vorteil ist dabei, dass überschüssige Leistung an den Bremswiderstand abführbar ist, wobei bei Erreichen der Leistungsgrenze des Bremswiderstands der erste Halbleiterschalter öffenbar ist. Gleichzeitig sind die Halbleiterschalter des Wechselrichters öffenbar. Da der dann von der Streuinduktivität des Elektromotors getriebene über die parallel zu den Halbleiterschaltern angeordneten Freilaufdioden weiterfließende Strom eine Spannungserhöhung bewirkt, ist diese durch Schließen des zweiten Halbleiterschalters begrenzbar. Dabei muss die Impedanz nur eine viel niedrigere Leistungsgrenze aufweisen als der Bremswiderstand, weil nur die im Zwischenkreis dann überschüssig vorhandene Energie abgebaut werden muss. Zusätzliche Leistung strömt in den Zwischenkreis nicht mehr ein.

Somit ist der Antrieb mit erhöhter Sicherheit ausgestattet. Insbesondere schützt der Antrieb sich gegen Überspannung.

Bei einer vorteilhaften Ausgestaltung ist die Impedanz als Induktivität oder als Ohm'scher Widerstand ausführbar. Von Vorteil ist dabei, dass eine kostengünstige Ausführung erreichbar ist.

Bei einer vorteilhaften Ausgestaltung weist das Antriebssystem eine Signalelektronik auf, welche mit einem Mittel zur Erfassung der am gleichspannungsseitigen Anschluss des Wechselrichters anliegenden Spannung verbunden ist und welche derart geeignet ausgeführt ist, dass ein Ansteuersignal für den ersten Halbleiterschalter und ein Ansteuersignal für den zweiten Halbleiterschalter derart erzeugt, dass
- der erste Halbleiterschalter geschlossen wird, wenn die Spannung einen ersten Schwellwert überschreitet, und geöffnet wird, wenn die Spannung einen dritten Schwellwert überschreitet, und
- der zweite Halbleiterschalter geschlossen wird, wenn die Spannung einen vierten Schwellwert überschreitet,
   insbesondere und geöffnet wird, wenn er eine maximale Zeitspanne lang geschlossen war.

Von Vorteil ist dabei, dass bei einem Anstieg der Spannung zunächst versucht wird, die überschüssige Energie des Zwischenkreises an einen Bremswiderstand abzuführen. Bei weiterem Anstieg der Spannung wird nach Überschreiten eines kritischen Schwellwerts der Bremswiederstand abgetrennt und auch die Halbleiterschalter des Wechselrichters geöffnet. Diese Halbleiterschalter sind in drei parallel zueinander geschalteten Halbbrücken angeordnet, wobei in jeder Halbbrücke ein oberer und ein unterer Halbleiterschalter in Reihe geschaltet sind. Bei diesem Öffnen der Halbleiterschalter wird durch die Streuinduktivität des Elektromotors ein Strom durch die den Halbleiterschaltern parallel geschalteten Freilaufdioden getrieben. Dabei erhöht sich die Spannung bis zu einem zweiten kritischen Wert, nämlich dem vierten Schwellwert, bei dessen Überschreiten dann die Impedanz zugeschaltet wird, um die Spannung abzusenken, indem die überschüssige Energie aus dem Zwischenkreis entnommen wird und über die Impedanz in Wärme verwandelt wird.

Erfindungsgemäß weist der Wechselrichter Halbleiterschalter auf, insbesondere wobei die Halbleiterschalter in parallel geschalteten Halbbrücken angeordnet sind, wobei jede Halbbrücke einen oberen und einen dazu in Reihe geschalteten unteren Halbleiterschalter aufweist,

insbesondere wobei die Parallelschaltung der Halbbrücken den gleichspannungsseitigen Anschluss des Wechselrichters bilden oder mit ihm insbesondere direkt verbunden ist. Von Vorteil ist dabei, dass dem Elektromotor durch pulsweitenmoduliertes Ansteuern der Halbleiterschalter des Wechselrichters eine ein- oder mehrphasige Wechselspannung in einfacher Weise zur Verfügung stellbar ist.

Erfindungsgemäß werden die Halbleiterschalter des Wechselrichters geöffnet, wenn die Spannung einen dritten Schwellwert überschreitet. Von Vorteil ist dabei, dass der Wechselrichter vor einer gefährlich hohen Spannung geschützt ist.

Bei einer vorteilhaften Ausgestaltung ist der erste Schwellwert kleiner ist als der dritte Schwellwert, und der dritte Schwellwert ist kleiner als der vierte Schwellwert. Von Vorteil ist dabei, dass bei einem Spannungsanstieg zunächst mittels des Bremswiderstands Versuch wird, den Spannungsanstieg zu stoppen. Wenn dies jedoch nicht gelingt, weil beispielsweise der Bremswiderstand zu klein dimensioniert ist oder nicht vorhanden ist, erreicht die Spannung den vierten Schwellwert. Somit werden dann die Halbeliterschalter des Wechselrichters und des Bremswiderstands geöffnet, also die Teile des Umrichters geschützt.

Bei einer vorteilhaften Ausgestaltung wird der erste Halbleiterschalter geöffnet, wenn die Spannung einen zweiten Schwellwert unterschreitet, wobei der zweite Schwellwert kleiner ist als der erste Schwellwert. Von Vorteil ist dabei, dass ein Widerabschalten des Bremswiderstands mit Hysterese ausgeführt wird. Somit sind Schwingungen vermeidbar.
Wichtige Merkmale bei dem Verfahren zum Betreiben eines Antriebssystems sind, dass am gleichspannungsseitigen Anschluss eines Wechselrichters des Antriebssystems eine aus einem Bremswiderstand und einem ersten steuerbaren Halbleiterschalter gebildete erste Reihenschaltung angeschlossen ist,
wobei parallel zur ersten Reihenschaltung, insbesondere parallel zum gleichspannungsseitigen Anschluss des Wechselrichters, eine aus einer Impedanz und einem steuerbaren zweiten Halbleiterschalter gebildete zweite Reihenschaltung angeschlossen ist,
wobei die am gleichspannungsseitigen Anschluss des Wechselrichters anliegenden Spannung erfasst wird und ein Ansteuersignal für den ersten Halbleiterschalter und ein Ansteuersignal für den zweiten Halbleiterschalter derart erzeugt wird, dass
   - der erste Halbleiterschalter geschlossen wird, wenn die Spannung einen ersten Schwellwert überschreitet, und geöffnet wird, wenn die Spannung einen dritten Schwellwert überschreitet, und
   - der zweite Halbleiterschalter geschlossen wird, wenn die Spannung einen vierten Schwellwert überschreitet,
   insbesondere und geöffnet wird, wenn er eine maximale Zeitspanne lang geschlossen war.

Von Vorteil ist dabei, dass ein hoher Schutz für den Umrichter erreicht wird. Denn wenn mittels des Bremswiderstandes die generatorisch erzeugte Leistung nicht ausreichend als Wärme abführbar ist und daher die Spannung weiter ansteigt, wird ein Abschalten der Halbleiterschalter ermöglicht, indem die noch weiter ansteigende Spannung dann reduziert wird, indem die Impedanz Energie aus dem Zwischenkreis aufnimmt.

Erfindungsgemäß werden die Halbleiterschalter des Wechselrichters geöffnet, wenn die Spannung einen dritten Schwellwert überschreitet. Von Vorteil ist dabei, dass der Wechselrichter vor Zerstörung durch Überspannung schützbar ist.

Bei einer vorteilhaften Ausgestaltung ist der erste Schwellwert kleiner als der dritte Schwellwert, und der dritte Schwellwert ist kleiner als der vierte Schwellwert. Von Vorteil ist dabei, dass bei gefährlich hoher Spannung der Bremswiderstand abgeschaltet wird und bei weiterem Anstieg der Spannung die ganze im Zwischenkreis noch vorhandene Energie über die Impedanz in Wärme gewandelt wird. Denn vom Gleichrichter wird keine Energie in den Zwischenkreis zugeführt, da die Spannung höher ist als die Spitzenspannung des versorgenden Öffentlichen Wechselspannungsversorgungsnetzes.

Bei einer vorteilhaften Ausgestaltung wird der erste Halbleiterschalter geöffnet, wenn die Spannung einen zweiten Schwellwert unterschreitet, wobei der zweite Schwellwert kleiner ist als der erste Schwellwert. Von Vorteil ist dabei, dass bei zulässigen Spannungswerten der Bremswiderstand abgetrennt wird vom Zwischenkreis, da eine Umwandlung von Energie des Zwischenkreises in Wärme nicht notwendig ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

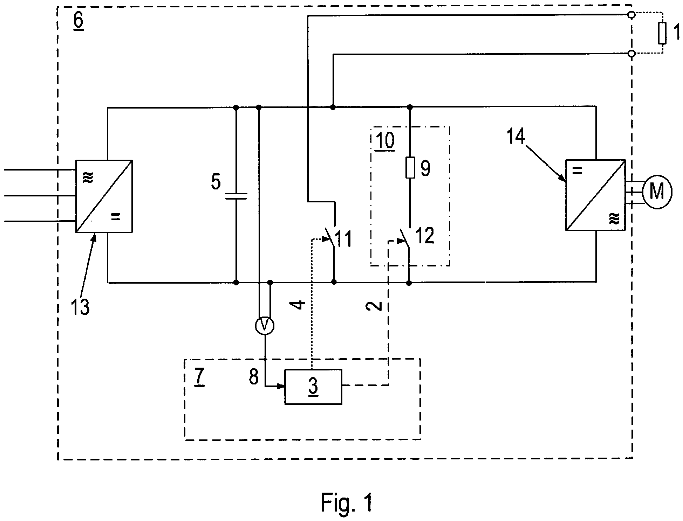

In der Figur 1 ist ein erfindungsgemäßes Antriebssystem schematisch dargestellt, das einen umrichtergespeisten Elektromotor aufweist, wobei der Umrichter eine Steuerlogik 3 umfasst.

In der Figur 2 ist die Steuerlogik 3 näher dargestellt.

Wie in den Figuren dargestellt, weist das Antriebssystem einen Umrichter 6 auf, dessen Gleichrichter 13 vom Wechselspannungsversorgungsnetz mit elektrischer Energie versorgbar ist.

Am gleichspannungsseitigen Anschluss des Gleichtrichters 13 ist eine Kapazität 5 angeordnet, die als Zwischenkreiskondensator bezeichenbar ist. Aus der so geglätteten Zwischenkreisspannung ist ein Wechselrichter 14 versorgbar. Hierzu ist der gleichspannungsseitige Anschluss des Wechselrichters 14 mit dem gleichspannungsseitigen Anschluss des Gleichrichters 13 verbunden. Die an diesem Anschluss, insbesondere also die am Zwischenkreiskondensator, anliegende Spannung wird mittels eines Spannungserfassungsmittels erfasst und von diesem erzeugten Spannungssignal einer Auswerteelektronik 7 zugeführt. Abhängig von dem Spannungssignal und/oder dessen Verlauf wird ein erstes Ansteuersignal 4 für einen ersten steuerbaren Halbleiterschalter 11 und ein zweites Ansteuersignal 2 für einen zweiten steuerbaren Halbleiterschalter 12 erzeugt.

Dabei ist der ersten Halbleiterschalter 11 in Reihe angeordnet mit einem Bremswiderstand 1, der außerhalb des Gehäuses des Umrichters 6 oder alternativ innerhalb des Gehäuses des Umrichters angeordnet ist.

Diese aus dem ersten Halbleiterschalter 11 und dem Bremswiderstand 1 gebildete Reihenschaltung ist aus der am gleichspannungsseitigen Anschluss des Wechselrichters 14 anliegenden Spannung versorgt.

Der zweite Halbleiterschalter 12 ist mit einer Impedanz 9, insbesondere einem Widerstand oder einer Induktivität, in Reihe angeordnet, die innerhalb des Gehäuses des Umrichters angeordnet ist.

Diese aus dem zweiten Halbleiterschalter 12 und der Impedanz 9 gebildete Reihenschaltung ist ebenfalls aus der am gleichspannungsseitigen Anschluss des Wechselrichters 14 anliegenden Spannung versorgt.

Am wechselspannungsseitigen Ausgang des Wechselrichters ist ein Elektromotor M, insbesondere ein Drehstrommotor, angeschlossen, dessen Drehzahl vom Umrichter regelbar oder zumindest steuerbar ist.

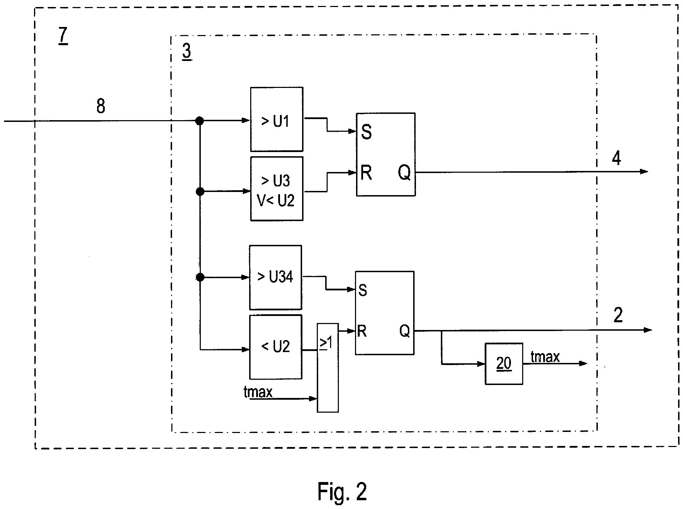

Wie in Figur 2 dargestellt, ist die in der Signalelektronik 7 ausgeführte Steuerlogik 3 derart ausgeführt, dass bei Überschreiten eines ersten Schwellwertes U1, beispielsweise 850 Volt, der erste Halbleiterschalter 11 eingeschaltet wird und somit der Bremswiderstand 1 wirksam wird, wenn er vorhanden ist. Somit wird ein weiterer Anstieg der Zwischenkreisspannung verhindert, wenn die an den Bremswiederstand 1 geleitete Leistung größer ist als die in den Zwischenkreis eingeleitete Leistung, insbesondere generatorisch erzeugte Leistung des Elektromotors.

Unterschreitet die Zwischenkreisspannung den zweiten Schwellwert U2, welcher kleiner ist als der erste Schwellwert U1, wird der erste Halbleiterschalter 11 wieder ausgeschaltet

Steigt jedoch durch eine hohe Zufuhr generatorisch erzeugter Leistung in den Zwischenkreis die Zwischenkreisspannung weiter an, werden bei Überschreiten eines dritten Schwellwertes U3, insbesondere beispielsweise 1000 Volt, der Bremswiderstand 1 und der Wechselrichter 14 abgeschaltet, also der erste Halbleiterschalter 11 geöffnet und die Halbleiterschalter des Wechselrichters ebenso.

Da bei diesem Abschalten, insbesondere des Bremswiderstands 1, eine Spannungsüberhöhung bewirkt wird, steigt die Zwischenkreisspannung beim Abschalten zunächst an, bis ein vierter Schwellwert U4, insbesondere beispielsweise 1050 Volt, überschritten wird, so dass dann der zweite Halbleiterschalter 12 geschlossen wird und auf diese Weise die Impedanz 9 elektrische Leistung aus dem Zwischenkreis herausnimmt.

Die Spannungsüberhöhung wird getrieben von der Streufeldinduktivität des Motors, da beim Abschalten der Halbleiterschalter des Wechselrichters 14 die Hauptfeldinduktivität des Motors abgetrennt ist. Der von der Streufeldinduktivität beim Abschalten getriebene Strom fließt über Freilaufdioden, welche zu den Halbleiterschaltern des Wechselrichters parallelgeschaltet sind.

Die Impedanz 9 muss nur eine geringe Energiemenge aufnehmen, da die Halbleiterschalter des Wechselrichters 14 und der erste Halbleiterschalter 11 geöffnet sind und vom Gleichrichter 13 keine Leistung in den Zwischenkreis zugeführt wird, da die Schwellwerte alle größer als die im Wechselspannungsversorgungsnetz auftretenden Spitzenspannungen sind.

Wie in Figur 2 gezeigt, wird nach dem Schließen des zweiten Halbleiterschalters 12 ein Timer 20 gestartet, welcher nach Erreichen einer maximalen Zeitspanne tmax ein Öffnen des zweiten Halbleiterschalters 12 bewirkt. Somit ist dieser geschützt gegen Überlastung. Die maximale Zeitspanne tmax ist dabei vorzugsweise derart bemessen, dass die vorhersehbare überschüssige Energie, welche beim Öffnen des ersten Halbleiterschalters 11 und der Halbleiterschalter des Wechselrichters 14 im Zwischenkreis auftritt, abbaubar ist.

Bei Unterschreiten des zweiten Schwellwertes U2, beispielsweise 750 Volt, wird der zweite Halbleiterschalter 11 wieder geöffnet. Insbesondere werden also der erste und der zweite Halbleiterschalter (11, 12) dann gleichzeitig geöffnet.

Bei weiteren erfindungsgemäßen Ausführungsbeispielen ist der Bremswiderstand 1 nicht vorhanden. Dies kann beispielsweise dadurch bewirkt sein, dass er bei der Herstellung oder Inbetriebnahme vergessen wurde oder dass er überlastet und zerstört wurde.

### Bezugszeichenliste

1 Bremswiderstand, insbesondere externer Bremswiderstand
2 zweites Ansteuersignal
3 Steuerlogik
4 erstes Ansteuersignal
5 Kapazität, insbesondere Kondensator
6 Umrichter
7 Signalelektronik
8 erfasster Zwischenkreisspannungswert, insbesondere Spannungssignal
9 Impedanz
10 Begrenzereinheit
11 erster steuerbarer Halbleiterschalter
12 zweiter steuerbarer Halbleiterschalter
13 Gleichrichter
14 Wechselrichter
20 Timer

M Elektromotor
tmax maximale Zeitspanne

## Patentansprüche

1. Antriebssystem mit Wechselrichter (14) und Elektromotor,
wobei der Elektromotor aus dem wechselspannungsseitigen Anschluss des Wechselrichters gespeist wird,
wobei am gleichspannungsseitigen Anschluss des Wechselrichters eine aus einem Bremswiderstand und einem ersten steuerbaren Halbleiterschalter (11) gebildete erste
Reihenschaltung angeschlossen ist,
**wobei** zur ersten Reihenschaltung, insbesondere parallel zum gleichspannungsseitigen Anschluss des Wechselrichters, eine aus einer Impedanz und einem steuerbaren zweiten Halbleiterschalter (12) gebildete, zweite Reihenschaltung parallel angeschlossen und/oder geschaltet ist,
**wobei das Antriebssystem eine** Signalelektronik (7) **aufweist, welche mit einem Mittel zur**
**Erfassung der am gleichspannungsseitigen Anschluss des Wechselrichters anliegenden Spannung verbunden ist,**
**wobei der Wechselrichter Halbleiterschalter aufweist,**
**dadurch gekennzeichnet, dass**
**die** Halbleiterschalter (11;12) **des Wechselrichters geöffnet werden, wenn die Spannung einen dritten Schwellwert überschreitet.**

2. Antriebssystem nach Anspruch 1,
**dadurch gekennzeichnet, dass**
die Impedanz als Induktivität oder als Ohm'scher Widerstand ausführbar ist.

3. Antriebssystem nach einem der vorangegangenen Ansprüche,
**dadurch gekennzeichnet, dass**
**die Signalelektronik** derart geeignet ausgeführt ist, dass ein Ansteuersignal für den ersten Halbleiterschalter und ein Ansteuersignal für den zweiten Halbleiterschalter derart erzeugt, dass
- der erste Halbleiterschalter geschlossen wird, wenn die Spannung einen ersten Schwellwert überschreitet, und geöffnet wird, wenn die Spannung den dritten Schwellwert überschreitet, und
- der zweite Halbleiterschalter geschlossen wird, wenn die Spannung einen vierten Schwellwert überschreitet, und geöffnet wird, wenn **der zweite Halbleiterschalter** eine maximale Zeitspanne lang geschlossen war.

4. Antriebssystem nach einem der vorangegangenen Ansprüche,
**dadurch gekennzeichnet, dass**
die Halbleiterschalter in parallel geschalteten Halbbrücken angeordnet sind, wobei jede Halbbrücke einen oberen und einen dazu in Reihe geschalteten unteren Halbleiterschalter aufweist,
insbesondere wobei die Parallelschaltung der Halbbrücken den gleichspannungsseitigen Anschluss des Wechselrichters bilden oder mit ihm insbesondere direkt verbunden ist.

5. Antriebssystem nach einem der vorangegangenen Ansprüche,
**dadurch gekennzeichnet, dass**
der erste Schwellwert kleiner ist als der dritte Schwellwert,
und dass
der dritte Schwellwert kleiner ist als der vierte Schwellwert.

6. Antriebssystem nach einem der vorangegangenen Ansprüche,
**dadurch gekennzeichnet, dass**
der erste Halbleiterschalter geöffnet wird, wenn die Spannung einen zweiten Schwellwert unterschreitet, wobei der zweite Schwellwert kleiner ist als der erste Schwellwert.

7. Verfahren zum Betreiben eines Antriebssystems,
wobei am gleichspannungsseitigen Anschluss eines Wechselrichters (14) des Antriebssystems eine aus einem Bremswiderstand und einem ersten steuerbaren Halbleiterschalter (11) gebildete
erste Reihenschaltung angeschlossen ist,
wobei parallel zur ersten Reihenschaltung, insbesondere parallel zum
gleichspannungsseitigen Anschluss des Wechselrichters, eine aus einer Impedanz und einem steuerbaren zweiten Halbleiterschalter (12) gebildete zweite Reihenschaltung angeschlossen ist,
**wobei** die am gleichspannungsseitigen Anschluss des Wechselrichters anliegenden Spannung erfasst wird und ein Ansteuersignal für den ersten Halbleiterschalter und ein Ansteuersignal für den zweiten Halbleiterschalter derart erzeugt wird, dass
- der erste Halbleiterschalter (11) geschlossen wird, wenn die Spannung einen ersten Schwellwert überschreitet, und geöffnet wird, wenn die Spannung einen dritten Schwellwert überschreitet, und
- der zweite Halbleiterschalter (12) geschlossen wird, wenn die Spannung einen vierten Schwellwert überschreitet, und geöffnet wird, wenn **der zweite Halbleiterschalter** eine maximale Zeitspanne lang geschlossen war,
**dadurch gekennzeichnet, dass**
**die** Halbleiterschalter (11;12) **des Wechselrichters geöffnet werden, wenn die Spannung** den **dritten Schwellwert überschreitet.**

8. Verfahren nach Anspruch 7,
**dadurch gekennzeichnet, dass**
der erste Schwellwert kleiner ist als der dritte Schwellwert,
und dass
der dritte Schwellwert kleiner ist als der vierte Schwellwert.

9. Verfahren nach Anspruch 8 oder 7,
**dadurch gekennzeichnet, dass**
der erste Halbleiterschalter geöffnet wird, wenn die Spannung einen zweiten Schwellwert unterschreitet, wobei der zweite Schwellwert kleiner ist als der erste Schwellwert.

## Claims

1. Drive system comprising an inverter (14) and an electric motor,
the electric motor being fed from the AC voltage-side terminal of the inverter,
a first series circuit formed of a braking resistor and a first controllable semiconductor switch (11) being connected to the DC voltage-side terminal of the inverter,
a second series circuit formed of an impedor and a second controllable semiconductor switch (12) being connected and/or wired in parallel with the first series circuit, in particular in parallel with the DC voltage-side terminal of the inverter,
the drive system comprising signal electronics (7), which are connected to a means for detecting the voltage applied to the DC voltage-side terminal of the inverter,
the inverter comprising semiconductor switches,
**characterised in that**
the semiconductor switches (11; 12) of the inverter are opened when the voltage exceeds a third threshold value.

2. Drive system according to claim 1,
**characterised in that**
the impedor can be implemented as an inductor or as an ohmic resistor.

3. Drive system according to any of the preceding claims,
**characterised in that**
the signal electronics are suitably configured such that actuation signal for the first semiconductor switch and an actuation signal for the second semiconductor switch are generated in such a way that
- the first semiconductor switch is closed when the voltage exceeds a first threshold value, and is opened when the voltage exceeds the third threshold value, and
- the second semiconductor switch is closed when the voltage exceeds a fourth threshold value, and is opened when the second semiconductor switch has been closed for a maximum length of time.

4. Drive system according to any of the preceding claims,
**characterised in that**
the semiconductor switches are arranged in half-bridges that are wired in parallel, each half-bridge having an upper semiconductor switch and a lower semiconductor switch wired in series therewith,
the parallel circuit of the half-bridges in particular forming the DC voltage-side terminal of the inverter or being connected thereto, in particular directly connected thereto.

5. Drive system according to any of the preceding claims,
**characterised in that**
the first threshold value is lower than the third threshold value
and **in that**
the third threshold value is lower than the fourth threshold value.

6. Drive system according to any of the preceding claims,
**characterised in that**
the first semiconductor switch is opened when the voltage falls below a second threshold value, the second threshold value being lower than the first threshold value.

7. Method for operating a drive system,
a first series circuit formed of a braking resistor and a first controllable semiconductor switch (11) being connected to the DC voltage-side terminal of an inverter (14) of the drive system, a second series circuit formed of an impedor and a second controllable semiconductor switch (12) being connected in parallel with the first series circuit, in particular in parallel with the DC voltage-side terminal of the inverter,
the voltage applied to the DC voltage-side terminal of the inverter being detected, and an actuation signal for the first semiconductor switch and an actuation signal for the second semiconductor switch being generated in such a way that
- the first semiconductor switch (11) is closed when the voltage exceeds a first threshold value, and is opened when the voltage exceeds a third threshold value, and
- the second semiconductor switch (12) is closed when the voltage exceeds a fourth threshold value, and is opened when the second semiconductor switch has been closed for a maximum length of time,
**characterised in that**
the semiconductor switches (11; 12) of the inverter are opened when the voltage exceeds the third threshold value.

8. Method according to claim 7,
**characterised in that**
the first threshold value is lower than the third threshold value
and **in that**
the third threshold value is lower than the fourth threshold value.

9. Method according to claim 8 or claim 7,
**characterised in that**
the first semiconductor switch is opened when the voltage falls below a second threshold value, the second threshold value being lower than the first threshold value.

## Revendications

1. Système d'entraînement pourvu d'un onduleur (14) et d'un moteur électrique, le moteur électrique étant alimenté à partir du raccordement côté tension alternative de l'onduleur,
un premier circuit série formé d'une résistance de freinage et d'un premier commutateur à semi-conducteurs pouvant être commandé (11) étant raccordé au raccordement côté tension continue de l'onduleur,
un second circuit série formé d'une impédance et d'un second commutateur à semi-conducteurs pouvant être commandé (12) étant raccordé et/ou connecté en parallèle au premier circuit série, en particulier en parallèle au raccordement coté tension continue de l'onduleur,
le système d'entraînement présentant une électronique de signal (7), qui est reliée à un moyen de détection de la tension appliquée au raccordement côté tension continue de l'onduleur,
l'onduleur comportant des commutateurs à semi-conducteurs,
**caractérisé en ce que**
les commutateurs à semi-conducteurs (11 ;12) de l'onduleur sont ouverts lorsque la tension dépasse une troisième valeur de seuil.

2. Système d'entraînement selon la revendication 1,
**caractérisé en ce que**
l'impédance peut être exécutée en tant qu'inductance ou en tant que résistance ohmique.

3. Système d'entraînement selon l'une quelconque des revendications précédentes, **caractérisé en ce que**
l'électronique de signal est conçue de telle sorte qu'un signal de commande pour le premier commutateur à semi-conducteurs et un signal de commande pour le second commutateur à semi-conducteurs sont produits de telle sorte que
- le premier commutateurs à semi-conducteurs est fermé lorsque la tension dépasse une première valeur de seuil et est ouvert lorsque la tension dépasse une troisième valeur de seuil, et
- le second commutateur à semi-conducteurs est fermé lorsque la tension dépasse une quatrième valeur de seuil et est ouvert lorsque le second commutateur à semi-conducteurs a été fermé pendant une période de temps maximale.

4. Système d'entraînement selon l'une quelconque des revendications précédentes, **caractérisé en ce que**
les commutateurs à semi-conducteurs sont agencés en demi-ponts raccordés en parallèle, chaque demi-pont comprenant un commutateur à semi-conducteurs supérieur et un commutateurs à semi-conducteurs inférieur connectés en série,
en particulier, le raccordement en parallèle des demi-ponts constituant le raccordement côté tension continue de l'onduleur ou y étant en particulier directement reliée.

5. Système d'entraînement selon l'une quelconque des revendications précédentes, **caractérisé en ce que**
la première valeur de seuil est inférieure à la troisième valeur de seuil,
et **en ce que**
la troisième valeur de seuil est inférieure à la quatrième valeur de seuil.

6. Système d'entraînement selon l'une quelconque des revendications précédentes,
**caractérisé en ce que**
le premier commutateur à semi-conducteurs est ouvert lorsque la tension descend en dessous d'une deuxième valeur de seuil, la deuxième valeur de seuil étant inférieure à la première valeur de seuil.

7. Procédé pour faire fonctionner un système d'entraînement,
au raccordement côté tension continue d'un onduleur (14) du système d'entraînement est connecté un premier circuit série constitué d'une résistance de freinage et d'un premier commutateurs à semi-conducteurs pouvant être commandé (11),
un second circuit série formé d'une impédance et d'un second commutateur à semi-conducteurs pouvant être commandé (12) étant raccordé et/ou connecté en parallèle au premier circuit série, en particulier en parallèle au raccordement coté tension continue de l'onduleur,
la tension appliquée au raccordement côté tension continue de l'onduleur est détectée et un signal de commande pour le premier commutateur à semi-conducteurs et un signal de commande pour le second commutateur à semi-conducteurs sont générés de telle sorte que
- le premier commutateurs à semi-conducteurs (11) est fermé lorsque la tension dépasse une première valeur de seuil et est ouvert lorsque la tension dépasse une troisième valeur de seuil, et
- le second commutateur à semi-conducteurs (12) est fermé lorsque la tension dépasse une quatrième valeur de seuil et est ouvert lorsque le second commutateur à semi-conducteurs a été fermé pendant une période de temps maximale,
**caractérisé en ce que**
les commutateurs à semi-conducteurs (11 ;12) de l'onduleur sont ouverts lorsque la tension dépasse la troisième valeur de seuil.

8. Procédé selon la revendication 7,
**caractérisé en ce que**
la première valeur de seuil est inférieure à la troisième valeur de seuil,
et **en ce que**
la troisième valeur de seuil est inférieure à la quatrième valeur de seuil.

9. Procédé selon la revendication 8 ou 7,
**caractérisé en ce que**
le premier commutateur à semi-conducteurs est ouvert lorsque la tension descend en dessous d'une deuxième valeur de seuil, la deuxième valeur de seuil étant inférieure à la première valeur de seuil.
